# EUROPÄISCHE PATENTANMELDUNG

(11) **EP 0 765 600 A1**
(43) Veröffentlichungstag der Anmeldung: **02.04.1997**
(21) Anmeldenummer: 96890133.0
(22) Anmeldetag: 12.08.1996
(51) Int. Cl.: A01K 5/02

(54) **Anlage zur dosierten Abgabe von Futter an mehrere Abgabestellen**

(30) Priorität: 27.09.1995 AT 1600/95; 17.01.1996 AT 18/96 U
(71) Anmelder: Vogl, Gerhard, Dipl.-Ing., A-4070 Eferding (AT)
(72) Erfinder: Vogl, Gerhard, Dipl.-Ing., A-4070 Eferding (AT)
(74) Vertreter: Hübscher, Heiner, Dipl.-Ing.

(57) **Zusammenfassung**

Bei einer Anlage zur dosierten Abgabe von Futter an mehrere Abgabestellen (10), mit einer von einem Mischer aus mit Futter beschickbaren Förderleitung (1), die zusätzlich über Leitungen und Absperrorgane mit Druckluft beaufschlagbar ist, und den Abgabestellen (10) zugeordneten, über Absperrorgane (2, 3, 8) einzeln freigebbaren Auslaßleitungen (9) ist zur Verringerung der Anzahl von Absperrorganen (2, 3) in der Förderleitung (1) zwei oder mehreren über ihre Absperrorgane (8) einzeln freigebbaren Auslaßleitungen (9) nur ein gemeinsames, den weiterführenden Teil der Förderleitung (1) bei freigegebenen Auslaßleitungen (9) sperrendes Abzweigventil (2, 3) zugeordnet. Die Auslaßleitungen (9) können über Ventile (6, 7) und Dreiwegeventile (2, 3) oder im Futterdurchlaufweg direkt vor dem dann als Sperrventil ausgebildeten Abzweigventil an die Förderleitung (1) anschließen.

## Beschreibung

Die Erfindung betrifft eine Anlage zur dosierten Abgabe von Futter an mehrere Abgabestellen, mit einer von einem Mischer aus mit Futter beschickbaren Förderleitung, die zusätzlich über Leitungen und Absperrorgane mit Druckluft beaufschlagbar ist, und den Abgabestellen zugeordneten, über Absperrorgane einzeln freigebbaren Auslaßleitungen.

Eine derartige, für die Abgabe von Flüssigfutter, insbesondere Kleietrank an Kälber bestimmte Anlage ist aus der FR 2 574 623 A bekannt. Es ist möglich, für die einzelnen Abgabestellen bestimmte Futterportionen mittels einer dem Mischer nachgeordneten Pumpe in die als Rohrleitung, meist als Ringleitung ausgebildete Förderleitung zu pumpen, und nach Öffnen des der jeweiligen Abgabestelle zugeordneten Absperrorganes durch Druckluftzufuhr, sozusagen per Rohrpost, der Abgabestelle zuzuführen.

Eine ähnliche Anlage ist Gegenstand der EP 0 595 784 A und der entsprechenden AT 399 439 B. Dabei ist ein Mischbetrieb möglich, bei dem ein Teil der Abgabestellen unter Einsatz eines als Wiegebehälter ausgebildeten Mischbehälters für die Dosierung mittels der Flüssigfutterförderpumpe versorgt wird und nur ein verbleibender Futterrest in Einzelportionen durch Druckluftzufuhr zu weiteren, auswählbaren Abgabestellen transportiert wird. Zusätzlich kann man bei dieser Anlage aber auch bei anderen Anlagen Druckluft, in die gegebenenfalls eine Reinigungsflüssigkeit eingesprüht wird, zum Reinigen der Leitungen, Ventile und Auslässe nach jedem Fütterungsvorgang verwenden. Eine Ausbildung der Förderleitung als zum Mischbehälter zurückführende Ringleitung ist ebenfalls möglich, wobei durch Futterrückführung und Ermittlung der Futterreste nach Futterabgabe an bestimmte Tiergruppen die Dosiergenauigkeit überwacht bzw. erhöht werden kann.

Aus der AT 391 585 B und der EP 0 373 147 B ist es bekannt, vorgemischtes Trokkenfutter mit Hilfe von Luft durch eine entsprechende Förderleitung zu den Ausgabestellen zugeordneten Abzweigen zu fördern, dabei am jeweils ausgewählten Abzweig die Hauptleitung hinter diesem Abzweig abzusperren und das ausgegebene Futter in einem meist als Zyklonmischer ausgebildeten Mischer mit Flüssigkeit anzufeuchten oder sogar zu Flüssigfutter aufzubereiten.

Bei allen beschriebenen Anlagen ist es notwendig, die Förderleitung über alle Abgabestellen, z. B. einzelne Freßplätze hinweg zu verlegen und an jeder Abgabestelle mit Absperreinrichtungen zu versehen, die den Weitertransport des Futters während der Abgabe an der jeweiligen Abgabestelle verhindern. Solche Absperreinrichtungen können aus einem der Abzweigstelle unmittelbar nachgeordneten Ventil und dem der jeweiligen Auslaßleitung zugeordneten Absperrorgan bestehen, werden aber häufig unter Zusammenziehung der Funktion der beiden Absperrorgane als Dreiwegeventile ausgeführt. Diese in der Förderleitung vorgesehenen Absperrorgane müssen in der Öffnungsstellung den gesamten, großen Querschnitt der Hauptförderleitung freigeben. Es handelt sich hier also um sehr aufwendige, teure und zum Teil auch störungsanfälligere Ventilkonstruktionen. Jedes Absperrorganl in der Hauptleitung führt zwangsläufig zu einer Erhöhung des Förderwiderstandes der Förderleitung und bildet eine für Verschmutzung anfällige Stelle. In manchen Fällen erschwert die beschriebene Leitungsführung notwendige bzw. sinnvolle Änderungen in der Anordnung der Abgabestellen innerhalb des Stalles und kann bei Erweiterungen des Stalles oder bei Zubau weiterer Ställe zu beträchtlichen Umbauarbeiten führen.

Aus der AT 337 491 B ist eine sich gattungsmäßig von Fütterungsanlagen der eingangs genannten Art unterscheidende Flüssigfütterungsanlage bekannt, bei der eine aus dem Mischbehälter fördemde Pumpe nur eine kurze Verteilerleitung beschickt, an die über Absperrorgane Zweigleitungen anschließen, die gesondert zu Abgabeauslässen in verschiedenen Stallabteilungen führen. Da nur im Pumpbetrieb gearbeitet wird, bleiben nach jeder Futterausgabe in den einzelnen Zweigleitungen und auch in der Verteilerleitung Futterreste zurück und es ist auch nicht möglich bzw. sinnvoll, die Verteilerleitung als Ringleitung auszubilden. Bevorzugt werden die Zweigleitungen als flexible Leitungen ausgeführt.

Aufgabe der Erfindung ist demnach die Schaffung einer Anlage der eingangs genannten Art, bei der die Leitungsführung der Förderleitung wesentlich vereinfacht werden kann, nachträgliche Änderungen in der Anordnung der Abgabestellen leicht ermöglicht werden und bei der es nicht notwendig ist, jeder Abgabestelle ein eigenes Absperrorgan in der Hauptförderleitung zuzuordnen.

Die gestellte Aufgabe wird erfindungsgemäß dadurch gelöst, daß zwei oder mehreren über die Absperrorgane einzeln freigebbare Auslaßleitungen nur ein gemeinsames, den weiterführenden Teil der Förderleitung bei freigegebenen Auslaßleitungen sperrendes Abzweigventil zugeordnet ist.

Wie bereits oben erwähnt wurde, können die Abzweigventile aus in der Förderleitung angeordneten Dreiwegeventilen oder auch aus dem jeweiligen Abzweig in Förderrichtung unmittelbar nachgeordnetem Absperrventil bestehen. Prinzipiell ist das erfindungsgemäße Grundprinzip sowohl bei reinen Flüssigfütterungsanlagen als auch bei Anlagen mit Trockenfutterzufuhr zu den Abgabestellen also in Anlagen nach allen eingangs beschriebenen Varianten einsetzbar. Durch entsprechende Organisation der Anlage ist es auch bei der erfindungsgemäßen Ausführung möglich, den einzelnen, an einen gemeinsamen Verteiler anschließenden Abgabestellen Futter verschiedener Zusammensetzung und in verschiedener Dosierung zuzuführen. Dabei kann bei Flüssigfutter ein Teil der Futterportionen im Pumpbetrieb und ein anderer Teil durch Druckluftzufuhr ähnlich wie nach dem EP 0 595 784 A gefördert werden. Es ist aber auch eine reine Druckluftförderung in Einzelportionen möglich und schließlich wird man beim Teilpumpbetrieb nach Ende des Fütterungsvorganges auch die über das zugepumpte Flüssigfutter versorgten Abgabestellen durch Druckluftzufuhr bzw. Zufuhr von Druckluft mit eingesprühter Reinigungsflüssigkeit säubem und desinfizieren.

Eine vorteilhafte Weiterbildung besteht darin, daß jeweils zwei oder mehrere über die Absperrorgane einzeln freigebbare Auslaßleitungen über einen Verteiler mit gemeinsamen Abzweigventilen der Förderleitung verbunden sind.

Die Hauptförderleitung kann weitgehend geradlinig und auf kurzem Weg geführt werden, da die Futteraufteilung und Zufuhr zu den einzelnen Abgabestellen über den Verteiler und die Auslaßleitungen erfolgt, wobei es kaum Schwierigkeiten bereitet, Verteiler mit verschiedener Anzahl an Anschlüssen für die Auslaßleitungen vorzusehen bzw. entsprechend umrüstbare Verteiler zu verwenden. Im Extremfall genügt es, wenn man bei mehreren aneinandergereihten Ställen für jeden Stall an der bevorzugt wieder als Ringleitung ausgebildenden Förderleitung nur ein Abzweigventil mit nachgeordnetem Verteiler vorsieht.

Nach einer Ausführungsvariante ist die Förderleitung vom Mischer mit Trockenfutter beschickbar, und ein Förderweg zwischen Abzweigventil und Verteiler ist als über eine weitere Leitung und ein Absperrorgan dosiert mit Flüssigkeit beschickbarer Mischbereich zur Anfeuchtung des Trockenfutters bzw. dessen Aufbereitung zu Flüssigfutter ausgebildet. Hier wird die Futterzufuhr und -aufbereitung ähnlich wie nach dem AT 391 585 B vorgenommen, doch kommt auch hier der Vorteil der Verringerung der Abzweige an der Hauptförderleitung und der möglichen unkomplizierten Leitungsführung dieser Leitung zum tragen.

In den meisten Fällen genügt es, die Flüssigkeit, die Wasser, Molke oder eine andere selbst Nährstoffe oder Medikamtente enthaltende Flüssigkeit sein kann, direkt in ein vom Abzweigventil od. dgl. zu dem z. B. als Register ausgebildeten Verteiler führendes Rohr einzusprühen, da durch die Weiterförderung im Register und durch die Auslaßleitungen ohnehin eine Durchmischung stattfindet. Man kann aber auch den Mischbereich als Zyklonmischer ausbilden.

Wenn es vor allem auf die Verringerung der Anzahl der Abzweigventile ankommt, können die Anschlußleitungen im Futterdurchlaufweg vor dem zugeordneten, als Sperrventil ausgebildeten Abzweigventil an die Förderleitung anschließen.

Weitere Einzelheiten und Vorteile des Erfindungsgegenstandes entnimmt man der nachfolgenden Zeichnungsbeschreibung. In der Zeichnung ist der Erfindungsgegenstand beispielsweise veranschaulicht. Es zeigen
- Fig. 1: schematisch einen Stallbereich einer Flüssigfütterungsanlage,
- Fig. 2: den entsprechenden Bereich einer mit Trockenfutterzufuhr arbeitenden Anlage und
- Fig. 3: eine Ausführungsvariante zu Fig. 1.

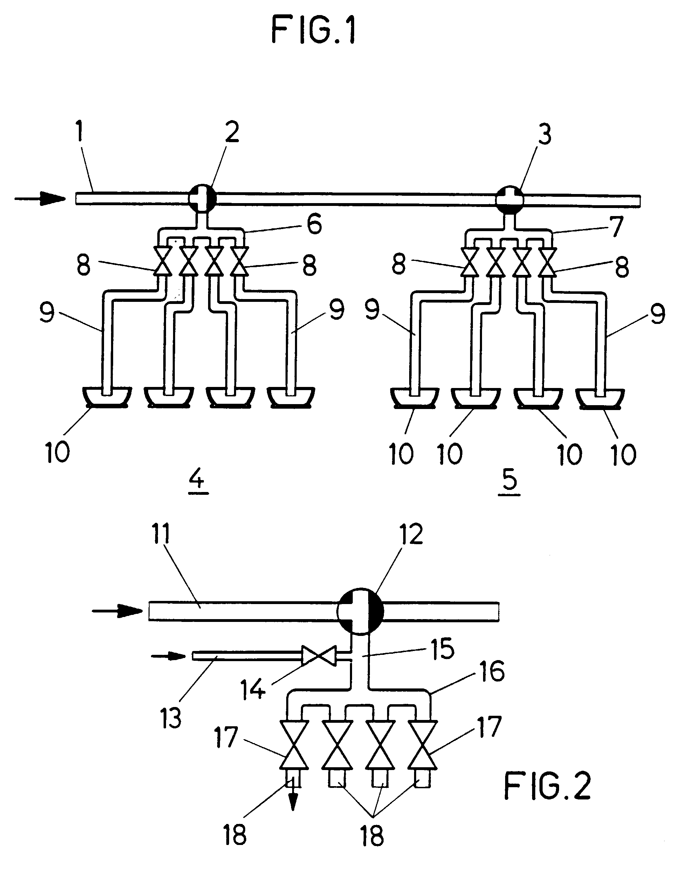

Nach Fig. 1 ist eine Förderleitung 1 vorgesehen, die von einem Mischer über eine Pumpe mit Flüssigfutter beschickt werden kann, wobei nach der einen eingangs geschilderten Möglichkeit jeweils eine für eine bestimmte Abgabestelle gedachte Futterportion in die Leitung gepumpt und dann durch Druckluftzufuhr zur jeweiligen Abgabestelle befördert wird.

In der Leitung 1, die auch als zum Mischer zurückführende Ringleitung ausgebildet sein kann, sind beim Ausführungsbeispiel zwei Dreiwegeventile 2, 3 angebracht, die je einem Stall 4 bzw. 5 zugeordnet werden. Den beiden Dreiwegeventilen 2, 3 ist je ein Verteilerregister 6, 7 nachgeordnet, an das, ebenso wie die Ventile 2, 3, von einer zentralen Steuereinheit gesteuerte Ventile 8 anschließen, die in geöffnetem Zustand über Leitungen 9 Abgabestellen 10 beschicken. Nach Fig. 1 ist momentan das Dreiwegeventil 2 in der dem Futterstrom zum Register 6 ableitenden Stellung. Eines der Ventile 8 ist geöffnet, so daß die zugeordnete, als Trog dargestellte Abgabestelle 10 mit Flüssigfutter beschickt wird. Vorzugsweise wird dann, wenn alle Abgabestellen 10 im Stall 4 beteilt wurden, eine Reinigung durch Zufuhr von Druckluft in die eine Spülflüssigkeit eingesprüht werden kann, vorgenommen, wobei die Ventile 8 nacheinander geöffnet werden. Es ist auch möglich, diese Reinigungsprozedur erst dann durchzuführen, wenn der gesamte Fütterungsvorgang in den Ställen 4, 5 beendet ist.

Bei der Variante nach Fig. 2 wird die Förderleitung 11 mit im Luftstrom getragenen Trockenfutter beschickt. In der Abzweigstellung des Dreiwegeventiles 12 gelangt das Futter in einen Leitungsteil 15, der seinerseits über eine Leitung 13 und ein Ventil 14 mit unter Druck stehender Flüssigkeit, z. B. Wasser oder Molke beschickt werden kann, so daß im Rohr eine Anfeuchtung des Trockenfutters bzw. seine Aufbereitung zu Flüssigfutter stattfindet. Es ist auch möglich, statt dem Rohr 15 einen Zyklonmischer vorzusehen. An das Rohr 15 schließt wieder ein Verteilerregister 16 mit Absperrorganen 17 an, die zu den Auslaßleitungen 18 und damit zu Abgabestellen führen.

Die Ventile 8, 17 können als einfache Membranventile ausgeführt sein und sind daher im Aufwand wesentlich einfacher als die Abzweigventile 2, 3, 12.

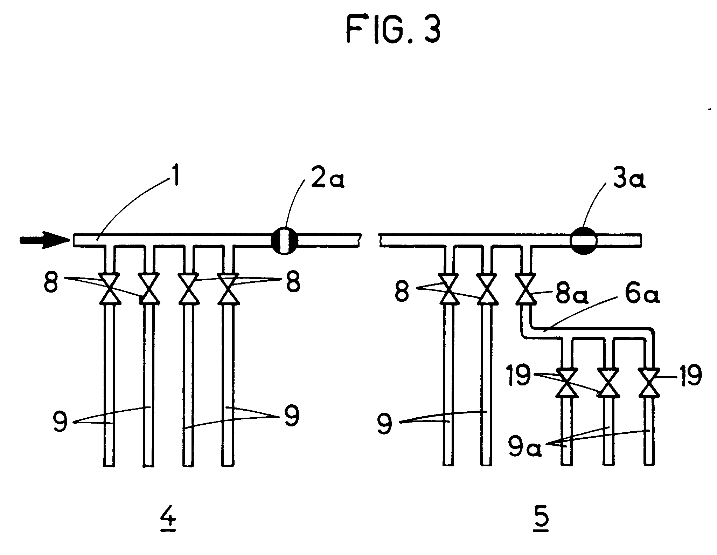

Nach Fig. 3 sind in der Leitung 1 zwei Absperrventile 2a, 3a angebracht, denen im Durchlaufweg des Flüssigfutters an die Förderleitung 1 anschließende Auslaßleitungen 9, 6a mit eingeschalteten Ventilen 8, 8a vorgeordnet sind, die, ebenso wie die Absperrventile 2a, 3a wieder von einer zentralen Steuereinheit gesteuert werden und in geöffnetem Zustand der Absperrventile 8, 8a hier nicht dargestellte Abgabestellen beschicken. Die Leitung 6a ist zusätzlich als Verteilerregister ausgeführt, an das über weitere Absperrventile 19 zu einzelnen Abgabestellen führende Leitungen 9a anschließen. In manchen Fällen kann hier auch das Ventil 8a entfallen und nur eine Aktivierung der Ventile 19 vorgenommen werden. Nach der Zeichnung ist das Absperrventil 2a geschlossen. Eines der Ventile 8 in einer der Leitungen 9 des Stalles 4 ist geöffnet, so daß die zugeordnete Abgabestelle mit Flüssigfutter beschickt wird. Sind alle für die Futterabgabe vorgesehenen Auslaßleitungen und die zugeordneten Abgabestellen beschickt, dann wird das Absperrventil 2a geöffnet und das Absperrventil 3a geschlossen, so daß nun die Auslaßleitungen 9 bzw. das Register 6a und im letzteren Fall über die Auslaßventile 19 die dort zugeordneten Abgabestellen beschickt werden können.

Die schon beschriebene Reinigung, auch eine gruppenweise Reinigung in den einzelnen Ställen 4, 5, ist mit den Absperrorganen programmierbar und möglich.

Die Ventile 8, 8a, 19 können wieder als einfache Membranventile ausgeführt sein und sind daher im Aufwand einfacher als die Absperrventile 2a, 3a. Selbstverständlich werden unter dem Begriff "Ventil" 2a, 3a, 8, 8a, 19 nicht nur Ventile, sondern alle anderen für diese Zwecke geeigneten Absperrorgane verstanden.

## Patentansprüche

1. Anlage zur dosierten Abgabe von Futter an mehrere Abgabestellen (10), mit einer von einem Mischer aus mit Futter beschickbaren Förderleitung (1), die zusätzlich über Leitungen und Absperrorgane mit Druckluft beaufschlagbar ist, und den Abgabestellen (10) zugeordneten, über Absperrorgane (2, 3, 8, 17, 19) einzeln freigebbaren Auslaßleitungen (9, 9a, 18) dadurch gekennzeichnet, daß zwei oder mehreren über die Absperrorgane (8, 8a, 17, 19) einzeln freigebbare Auslaßleitungen (9, 9a, 18) nur ein gemeinsames, den weiterführenden Teil der Förderleitung (1) bei freigegebenen Auslaßleitungen sperrendes Abzweigventil (2, 3, 12) zugeordnet ist.

2. Anlage nach Anspruch 1, dadurch gekennzeichnet, daß jeweils zwei oder mehrere über die Absperrorgane (8, 17) einzeln freigebbare Auslaßleitungen (9, 18) über einen Verteiler (6, 7, 16) mit gemeinsamen Abzweigventilen (2, 3, 12) der Förderleitung (1, 11) verbunden sind.

3. Anlage nach Anspruch 1 oder 2, dadurch gekennzeichnet, daß die Förderleitung (11) vom Mischer mit Trockenfutter beschickbar ist, und ein Förderweg (15) zwischen Abzweigventil (12) und Verteiler (16) als über eine weitere Leitung (13) und ein Absperrorgan (14) dosiert mit Flüssigkeit beschickbarer Mischbereich zur Anfeuchtung des Trockenfutters bzw. dessen Aufbereitung zu Flüssigfutter ausgebildet ist.

4. Anlage nach Anspruch 3, dadurch gekennzeichnet, daß der Mischbereich als Zyklonmischer ausgebildet ist.

5. Anlage nach Anspruch 1, dadurch gekennzeichnet, daß die Anschlußleitungen (6a, 9, 9a) im Futterdurchlaufweg vor dem zugeordneten, als Sperrventil ausgebildeten Abzweigventil (2a, 3a) an die Förderleitung (1) anschließen.
